# EUROPÄISCHE PATENTSCHRIFT

(11) **EP 0 777 010 B1**
(45) Veröffentlichungstag und Bekanntmachung des Hinweises auf die Patenterteilung: **05.02.2003**
(21) Anmeldenummer: 96118332.4
(22) Anmeldetag: 15.11.1996
(51) Int. Cl.: D06P 1/52, D06P 1/16, C08G 77/46, B01D 19/04

(54) **Polysiloxan-Polyoxyethylen-Polyoxypropylen-Triblockcopolymere und diese enthaltende Entschäumercompounds**
Polysiloxane-polyoxyethylene-polyoxypropylene triblock-copolymers and antifoam compounds containing the same
Copolymères tribloc polysiloxane-polyoxyéthylène-polyoxypropylène et composés antimousses les contenant

(30) Priorität: 30.11.1995 DE 19544586
(43) Veröffentlichungstag der Anmeldung: 04.06.1997
(73) Patentinhaber: Goldschmidt AG, 45127 Essen (DE)
(72) Erfinder: Heilen, Wernfried, 46519 Alpen (DE); Karminski, Hans-Leo, 45134 Essen (DE); Keup, Michael, Dr., 45130 Essen (DE); Klocker, Otto, 45277 Essen (DE); Silber, Stefan, Dr., 47804 Krefeld (DE); Spiegler, Roland, Dr., 65193 Wiesbaden (DE); Sucker, Roland, 59368 Werne (DE)

(56) Entgegenhaltungen:
- EP-A- 0 297 614
- EP-A- 0 659 837
- EP-A- 0 663 225
- EP-A- 0 719 539
- US-A- 2 829 112
- US-A- 5 032 662

## Beschreibung

Die Erfindung betrifft Polysiloxan-Polyoxyethylen-Polyoxypropylen-Triblockcopolymere und Compounds zur Entschäumung von wäßrigen Dispersionsfarben, die die Copolymere als wirksame Entschäumerkomponente enthalten.

Die Verwendung von Siliconölen, insbesondere Dimethylpolysiloxanen niedriger bis mittlerer Viskosität, für die Entschäumung wäßriger Lösungen oder Dispersionen ist bekannt und beispielsweise in dem Buch W. Noll "Chemie und Technologie der Silicone" beschrieben. Zur Verbesserung der entschäumenden Wirkung von mineralölbasierenden und/oder siliciumorganischen Entschäumern werden häufig hochdisperse anorganische oder organische Substanzen, insbesondere in der Regel pyrogen erzeugte Kieselsäuren, zugesetzt (DE-PS 10 67 003, DE-OS 19 14 684).

Es ist ebenfalls bekannt, Polyoxyalkylen-Polysiloxan-Copolymerisate als Entschäumungsmittel zu verwenden. In der US-PS 3 763 021 ist eine Zubereitung zur Entschäumung wäßriger Latices beschrieben, welche aus (1) 1 bis 20 Gew.-% eines Siloxanglycolcopolymeren der allgemeinen Formel 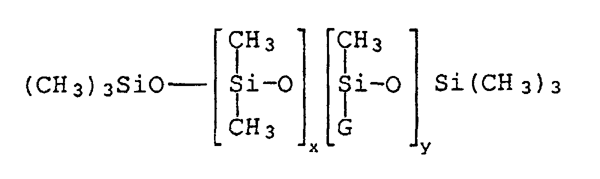 worin x einen durchschnittlichen Wert von 6 bis 420 und y einen durchschnittlichen Wert von 3 bis 30 hat und G einen Rest der Struktur -D(OR)_{z} A bedeutet, worin D ein Alkylenrest ist, R aus Ethylenresten und Propylen- oder Butylenresten in einem solchen Verhältnis von Ethylen- zu den anderen Alkylenresten zusammengesetzt ist, daß das Verhältnis von Kohlenstoffatomen zu Sauerstoffatomen in sämtlichen Blöcken OR im Bereich von 2,3 : 1 bis 2,8 : 1 liegt, z einen durchschnittlichen Wert von 25 bis 100 hat und A eine Abschlußgruppe ist, (2) 65 bis 98 Gew.-% Polypropylenglycol mit einem mittleren Molekulargewicht im Bereich von 1000 bis 2000 und (3) 1 bis 15 Gew.-% eines hydrophoben Siliciumdioxids besteht.

Typische Herstellungsmethoden dieser vorgenannten Polyoxyalkylen-Polysiloxan-Copolymeren sind in US-PS 3 402 192, US-PS 3 746 653, US-PS 3 784 479 und US-PS 3 865 544 beschrieben.

In der DE-PS 38 07 247 ist die Verwendung von Polyoxyalkylen-Polysiloxan-Blockmischpolymerisaten der allgemeinen Formel R₁ OA-(BA)ₘR₁, wobei A ein Polyoxyalkylenblock der durchschnittlichen Formel (CₙH₂ₙO-)_{y} ist, in der n einen Wert von 2,8 bis 4,0 und y einen Wert von 15 bis 100 hat, B ein Polysiloxanblock der durchschnittlichen Formel 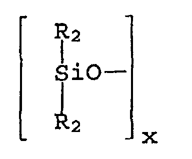 ist, wobei R₂ gleich oder verschieden ist und einen Alkylrest mit 1 bis 4 Kohlenstoffatomen oder einen Phenylrest bedeutet, jedoch mindestens 90 % der Reste R₂ Methylreste sind und x einen Wert von 10 bis 100 hat, R₁ gleich oder verschieden ist und einen Wasserstoff- oder Alkylrest mit 1 bis 4 Kohlenstoffatomen bedeutet und m einen Wert von 4 bis 20 hat, zur Entschäumung von wäßrigen Dispersionen polymerer, organischer Substanzen, insbesondere Dispersionen von Binde-, Beschichtungs- und Klebemitteln, beschrieben.

In der EP-A-0 663 225 werden Entschäumungsmittel beschrieben, die aus (I) einem Silikon-Entschäumer und (II) einem vernetzten Organopolysiloxan-Polymer bestehen, welches mindestens eine Polyoxyalkylen-Gruppe enthält.

Diese aus dem Stand der Technik bekannten Siliconöle oder Polyoxyalkylen-Polysiloxan-Copolymerisate enthaltenden Zubereitungen sind in mehr oder weniger ausgeprägtem Umfang geeignet, die Schaumbildung von wäßrigen Dispersionsfarben zu verhindern oder bereits gebildeten Schaum zu zerstören. Es hat sich jedoch gezeigt, daß mit derartigen Zubereitungen versetzte, wäßrige Dispersionsfarben durch den Zusatz solcher Entschäumungsmittel anwendungstechnische Nachteile aufweisen, welche auf den Zusatz dieser Entschäumungsmittel zurückzuführen sind.

Es hat sich insbesondere gezeigt, daß Hochglanzdispersionsfarben, welchen zur Entschäumung Polysiloxane oder Polyoxyalkylen-Polysiloxan-Copolymerisate zugesetzt worden sind, beim Aufbringen auf Oberflächen vielfältige Benetzungsfehler sowie reduzierten Glanz aufweisen. Diese Benetzungsfehler zeigen sich in ungleichmäßiger Benetzung des Untergrundes und führen zur Ausbildung von Beschichtungen ungleichmäßiger Dicke und im Extremfall zu Beschichtungen, welche Fehlstellen unterschiedlichen Ausmaßes aufweisen.

Durch die in der DE-PS 38 07 247 beschriebenen Polyoxyalkylen-Polysiloxan-Blockmischpolymerisate werden gerade diese Benetzungsfehler vermieden, wobei dem Fachmann geläufig ist, daß die entschäumende Wirkung der additivierten Dispersionsfarben mit der Zeit nachläßt.

Der vorliegenden Erfindung liegt die Aufgabe zugrunde, geeignete Polyoxyalkylen-Polysiloxan-Copolymerisate aufzufinden, welche in wäßrigen Dispersionsfarben gute entschäumende Wirkung zeigen, diesen Effekt über längere Zeit beibehalten, gleichzeitig aber keine Benetzungsstörungen beim Auftrag dieser Dispersionsfarben auf eine Oberfläche verursachen.

Diese der Erfindung zugrunde liegende Aufgabe wird überraschenderweise gelöst durch bestimmmte Polyoxyalkylen-Polysiloxan-Copolymere, nämlich durch Polysiloxan-Polyoxyethylen-Polyoxypropylen-Triblockcopolymere der allgemeinen Formel I 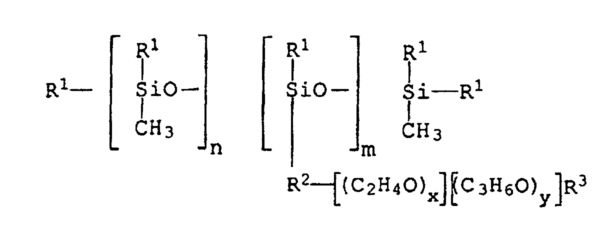 wobei
- R¹ =: Alkylrest mit 1 bis 8 Kohlenstoffatomen,
- R² =: -(CH₂)ₚO-, wobei p = 2, 3 oder 4 ist,
- R³ =: Wasserstoffrest oder Alkylrest mit 1 bis 4 Kohlenstoffatomen,
- n =: 40 bis 80,
- m =: 3 bis 10,
- x =: 3 bis 6 und
- y =: 20 bis 30,
mit der Maßgabe, daß das Verhältnis x/y 0,12 bis 0,20 beträgt.

Ein weiterer Gegenstand der Erfindung ist ein Entschäumercompound zur Entschäumung von wäßrigen Dispersionsfarben, welches dieses Polysiloxan-Polyoxyethylen-Polyoxypropylen-Triblockcopolymer als wirksame Entschäumerkomponente enthält.

Eine vorteilhaftes Compound besteht aus

| | | |
|---|---|---|
| a) | 72 bis 85 Gew.-Teilen | eines Polysiloxan-Polyoxyethylen-Polyoxypropylen-Triblockcopolymers gemäß Anspruch 1, |
| b) | 15 bis 28 Gew.-Teilen | eines nichtionischen Ethoxylierungsderivates mit einem HLB-Wert von 8 bis 12 sowie |
| c) | 0,1 bis 10,0 Gew.-%, | bezogen auf die Komponenten a) und b), eines anorganischen oder organischen Feststoffes. |

Von besonderer Bedeutung für die Eigenschaften der erfindungsgemäß in den Compounds eingesetzten Polysiloxan-Polyoxyethylen-Polyoxypropylen-Triblockcopolymeren ist der Polyoxyalkylenrest, wobei x und y derart gewählt sind, daß x = 3 bis 6, y = 20 bis 30, das Molverhältnis x/y aber in jedem Falle 0,12 bis 0,20 beträgt, die Anordnung der Polyoxalkylenblöcke blockweise so erfolgt, daß in jedem Falle der Polypropylenoxidblock endständig ist.

Es ist dem Fachmann geläufig, daß die Verbindungen in Form eines Gemisches mit einer im wesentlichen durch statistische Gesetze geregelten Verteilung vorliegen. Alle Indices stellen insofern Mittelwerte dar. Wie sich aus den Vergleichsbeispielen ergibt, hat sich überraschend gezeigt, daß die Werte x und y, deren Verhältnis sowie insbesondere der blockweise Aufbau der Polyoxyethylen- und Polyoxypropylenfragmente entscheidend für die Tatsache sind, daß die erfindungsgemäß in der Zubereitung enthaltenen Polyoxyalkylen-Polysiloxan-Copolymerisate ausgezeichnete Entschäumer sind, wobei die Wirksamkeit über einen längeren Zeitraum gewährleistet bleibt, ohne daß gleichzeitig Benetzungsfehler beim Auftrag der Entschäumer enthaltenden Dispersionsfarben verursacht werden.

Als nichtionisches Tensid enthalten die erfindungsgemäßen Zubereitungen nichtionische Ethoxylierungsderivate, deren HLB-Wert (hydrophilic, lipophilic balance; Definition nach W.C. Griffin; J. Soc. Cosmet. Chem. 1, 311 (1950), J. Soc. Cosmet. Chem. 5, 249 (1954)) 8 bis 12 beträgt. Beispiele sind die Fettsäureester mehrwertiger Alkohole, deren Polyethylenglycolderivate, die Polyglycolderivate von Fettsäuren und Fettalkoholen, Alkylphenolethoxylate sowie Blockcopolymere aus Ethylenoxid und Propylenoxid (Pluronics). Vorzugsweise werden Ethoxylierungsderivate fettchemischer Rohstoffe verwendet. Besonders bevorzugt sind nichtionische Oleyl- und Stearylderivate.

Beispiele anorganischer Feststoffe sind ggf. hydrophobierte Kieselsäure, Aluminiumoxid, Erdalkalicarbonate oder ähnliche aus dem Stand der Technik bekannte und übliche feinteilige Feststoffe. Als organische feinteilige Substanzen können für diesen Zweck bekannte Erdalkalisalze von langkettigen Fettsäuren mit 12 bis 22 Kohlenstoffatomen oder die Amide dieser Fettsäuren verwendet werden.

Die erfindungsgemäßen Zubereitungen können als solche oder in Form wäßriger Emulsionen verwendet werden. Dabei wird die Verwendung von Emulsionen aufgrund der besseren Dosierungsmöglichkeiten bevorzugt. Besonders bevorzugt sind Entschäumeremulsionen, deren mittlere Teilchengröße zwischen 1 und 10 µm liegt. Man verwendet insbesondere wäßrige Emulsionen mit einem Gehalt von 5 bis 50 % des Polysiloxan-Polyoxyethylen-Polyoxypropylen-Triblockcopolymers.

Beispiele erfindungsgemäßer und in den Entschäumercompounds besonders geeigneter Polysiloxan-Polyoxyethylen-Polyoxypropylen-Triblockcopolymere sind

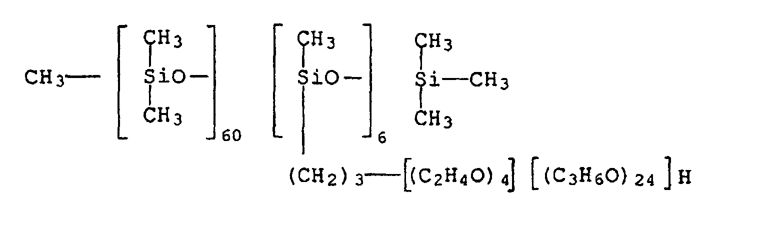

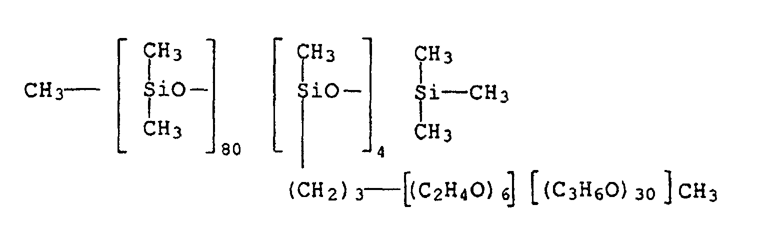

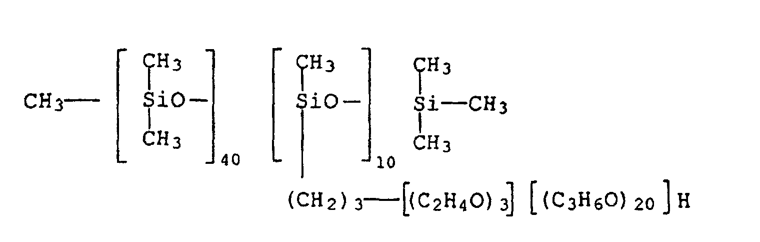

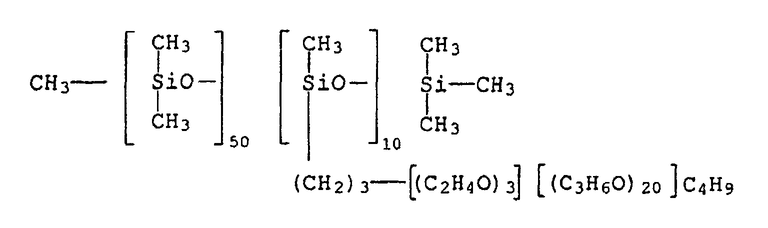

Diese Polyoxyalkylen-Polysiloxan-Copolymerisate werden durch Anlagerung von blockweise aufgebauten Polyoxyalkylenethern olefinisch ungesättigter Alkohole, wie z. B. Allylpolyoxyalkylenethern, an entsprechende Wasserstoffsiloxane hergestellt. Diese Reaktion wird durch Platinverbindungen katalysiert und ist z. B. in der DE-PS 11 65 028 beschrieben.

Etwaige Gehalte an freien Polyoxyalkylenglycolen oder deren Monoethern oder Monoestern, welche herstellungsbedingt in den erfindungsgemäß zu verwendenden Verbindungen enthalten sein können, können toleriert und müssen nicht vom Produkt abgetrennt werden.

Die erfindungsgemäßen Compounds werden den Dispersionsfarben in Mengen von 0,01 bis 0,50 Gew.-%, bezogen auf Farbenformulierung, als Entschäumer zugesetzt.

Die in den zu überprüfenden erfindungsgemäßen und nicht erfindungsgemäßen Zubereitungen verwendeten Polyoxyalkylen-Polysiloxan-(Co)polymerisate entsprechen der allgemeinen Formel I. Dabei haben die Reste R¹ die Bedeutung Methyl, R² die Bedeutung Propoxy und R³ sowie die Indices n, m, x und y die in nachfolgender Tabelle gezeigten Bedeutungen bzw. Werte. Als Feststoff wird jeweils 5 % Kieselsäure zugegeben.

| Zubereitung | R3 | n | m | x | y | x/y | Struktur des Polyethers | Gew.-% Polyethersiloxan | Gew.-% Ethoxylierungsderivat | Art | HLB | Gew.-% Feststoff |
|---|---|---|---|---|---|---|---|---|---|---|---|---|
| 1 | H | 60 | 6 | 4 | 24 | 0,17 | Block, PPO-Ende | 75 | 20 | PEO-Oleat | 10 | 5 |
| 2 | Methyl | 80 | 4 | 6 | 30 | 0,2 | Block, PPO-Ende | 80 | 15 | PEO-Stearylalkohol | 12 | 5 |
| 3 | H | 40 | 10 | 3 | 20 | 0,15 | Block, PPO-Ende | 75 | 22 | PEO-Laurylalkohol | 10 | 3 |
| 4 | Butyl | 50 | 10 | 3 | 20 | 0,15 | Block, PPO-Ende | 75 | 20 | PEO-Oleat | 10 | 5 |
| | | | | | | | | | | | | |
| 5* | H | 60 | 6 | 4 | 24 | 0,17 | Block, PEO-Ende | 75 | 20 | PEO-Oleat | 10 | 5 |
| 6* | H | 60 | 6 | 4 | 24 | 0,17 | statistisch | 75 | 20 | PEO-Oleat | 10 | 5 |
| 7* | H | 60 | 6 | 6 | 18 | 0,33 | Block, PPO-Ende | 75 | 20 | PEO-Oleat | 10 | 5 |
| 8* | H | 60 | 6 | 0 | 18 | 0 | PPO | 75 | 20 | PEO-Oleat | 10 | 5 |

| | | | | | | | | | | | | |
|---|---|---|---|---|---|---|---|---|---|---|---|---|
| * = Vergleichsbeispiele PEO = Polyethylenoxid PPO = Polypropylenoxid | | | | | | | | | | | | |

Als zusätzliche erfindungsgemäße Beispiele werden aus den selbstemulgierbaren Zubereitungen 1 und 2 die Emulsionen 9 und 10 hergestellt. Deren Herstellung erfolgt in an sich bekannter Weise durch fünfzehnminütiges Zusammenrühren der Zubereitung und der wäßrigen Lösung eines polyacrylatbasierenden, neutralisierten Verdickungsmittels mit Hilfe eines Scheibenrührers.

Die erfindungsgemäße Zubereitung 9 ist dadurch charakterisiert, daß sie eine 20 %ige wäßrige Emulsion der Zubereitung 1 mit einem mittleren Teilchendurchmesser von 2 µm darstellt. Die gleichfalls erfindungsgemäße Zubereitung 10 ist dadurch charakterisiert, daß sie eine 40 %ige Emulsion der Zubereitung 2 mit einem mittleren Teilchendurchmesser von 5 µm darstellt.

Im folgenden werden die anwendungstechnischen Eigenschaften der verschiedenen erfindungsgemäßen Zubereitungen sowie der Vergleichsbeispiele gezeigt.

Zur Überprüfung der anwendungstechnischen Eigenschaften werden die folgenden Dispersionsfarbenrezepturen ausgewählt (Mengenangaben in Gew.-%):

### Rezepturen 1 bis 5:

| Dispersionsfarbe 1 | | |
|---|---|---|
| Propylenglycol | 4,8 | |
| Collacral AS35 | 5,0 | BASF, Netz- und Dispergiermittel |
| Titandioxid | 23,2 | |
| Mergal K7 | 0,2 | Riedel de Haen, Konservierungsmittel |
| Butylglycol | 2,6 | |
| Dowanol DPM | 1,4 | |
| Wasser | 6,9 | |
| Acronal A603 | 54,3 | BASF, Reinacrylatdispersion |
| Rheolate 278 | 4,0 | Rheox, Verdicker |

| Dispersionsfarbe 2 | | |
|---|---|---|
| Wasser | 36,4 | |
| Coatex P50 | 0,4 | Coatex, Dispergiermittel |
| Calgon N | 0,1 | BK Ladenburg, Dispergiermittel |
| Mergal K7 | 0,2 | |
| Coatex BR100 | 2,3 | Coatex, PU-Verdicker |
| Calcidar Extra | 22,1 | Omya, Füllstoff |
| Titandioxid | 17,5 | |
| Finntalk M15 | 4,7 | |
| NaOH, 10 %ig | 0,1 | |
| Acronal 290D | 16,2 | BASF, Styrolacrylatdispersion |

| Dispersionsfarbe 3 | | |
|---|---|---|
| Wasser | 2,3 | |
| Propylenglycol | 5,0 | |
| Orotan 681 | 1,2 | Rohm & Haas, Dispergiermittel |
| Titandioxid | 21,2 | |
| Ethyldiglycol | 2,0 | |
| Dowanol DPnB | 1,3 | |
| Primal 2595 | 56,0 | Rohm & Haas, Acrylatdispersion |
| Acrysol RM1020 | 4,4 | Rohm & Haas, Verdicker |
| Acrysol RM8 | 0,4 | Rohm & Haas, Verdicker |
| Tilcom AT23 | 0,3 | Tioxide Chemicals, Thixotropiermittel |
| Triton GR5M | 0,1 | Rohm & Haas, Netzmittel |
| Wasser | 5,8 | |

| Dispersionsfarbe 4 | | |
|---|---|---|
| Mowolith DM123 | 51,6 | Hoechst, PVAC-Copolymerisat |
| Ammoniak, 25 %ig | 0,2 | |
| Tylose H4000p, 2 %ig | 20,2 | Hoechst, Verdicker |
| Calgon N, 10 %ig | 0,6 | |
| Titandioxid | 17,0 | |
| Hydrocarb 90 | 8,0 | Omya, Füllstoff |
| Parmetol A23 | 0,2 | Schülke & Mayr, Konservierungsmittel |
| Butyldiglycolacetat | 1,0 | |
| Texanol | 1,2 | |

| Dispersionsfarbe 5 | | |
|---|---|---|
| Wasser | 8,0 | |
| Acrysol RM-2020, 20 %ig | 1,6 | |
| Orotan 731 K | 1,1 | Rohm & Haas, Dispergiermittel |
| Triton CA | 0,4 | Rohm & Haas, Netzmittel |
| Calgon N | 0,2 | |
| Titandioxid | 15,5 | |
| Finntalk M15 | 3,7 | Füllstoff |
| Millicarb | 7,3 | Füllstoff |
| Wasser | 2,0 | |
| Primal SF-012 | 39,4 | Rohm & Haas, Styrolacrylatdispersion |
| Ropaque OP-62 LO-E | 6,4 | |
| Acrysol RM2020, 20 %ig | 3,2 | Rohm & Haas, Verdicker |
| Wasser | 11,0 | |
| Acrysol ASE-60, 30 %ig | 0,2 | Rohm & Haas, Verdicker |

Die Dispersionsfarben werden auf übliche Weise gemäß den vorstehenden Rezepturen formuliert. Alle Rezepturbestandteile werden in Lieferform eingesetzt. Als letzter Rezepturbestandteil wird jeweils die entsprechende Entschäumerzubereitung hinzugegeben. Dabei erfolgt die Einarbeitung eine Minute bei 1000 U/min.

Die Wirksamkeit der erfindungsgemäßen Zubereitungen wird anhand des nachfolgend beschriebenen Rollentests überprüft. Die Ergebnisse sind in den nachfolgenden Tabellen dargestellt.

### Rollentest

Der sogenannte Rollentest kommt den praktischen Bedingungen relativ nahe, so daß eine gute Differenzierung zwischen den unterschiedlichen Entschäumerzubereitungen auch im Hinblick auf einzusetzende Konzentrationen möglich ist.

Beim Rollentest werden mittels einer offenporigen Schaumrolle 40 g der zu untersuchenden Dispersionsfarbe auf einer nicht saugenden Prüfkarte mit einer Gesamtfläche von 500 cm² verteilt. Die Schaumstoffrolle wird vor der Farbapplikation mit Wasser benetzt. Es wird dabei sichergestellt, daß immer die gleiche zusätzliche Wassermenge in die vorgelegte Farbe eingebracht wird und damit die Trocknungszeit des Lackes stets gleichbleibt. Die Naßfilmauflage beträgt ca. 300 g/m² Fläche. Nach 24stündigem Trocknen des Films werden die Prüftafeln hinsichtlich des vorhandenen Makroschaums (Zahl der Blasen auf 100 cm²), hinsichtlich des vorhandenen Mikroschaums (Zahl der Nadelstiche durch Vergleich mit Prüftafeln mit verschieden stark ausgeprägten Störungsbildern, Skala von 1 (sehr gut) bis 5 (mangelhaft, viele Nadelstiche)) sowie hinsichtlich etwaiger Benetzungsdefekte bewertet.

Diese Tests werden wiederholt mit additivierten Dispersionsfarben, die 6 Wochen bei 50 °C gelagert worden sind.

| Ergebnisse des Rollentestes in Dispersionsfarbe 1 | | | | | | | |
|---|---|---|---|---|---|---|---|
| *Zubereitung* | *Konzentration* | *Makroschaum* | | *Mikroschaum* | | *Benetzungsfehler* | |
| | | *0 Wochen* | *6 Wochen* | *0 Wochen* | *6 Wochen* | *0 Wochen* | 6 Wochen |
| Nullprobe | 0 | 80 | 80 | 5 | 5 | keine | keine |
| 1 | 0.06 | 0 | 3 | 1 | 1 | keine | keine |
| 2 | 0.06 | 0 | 2 | 1 | 1 | keine | keine |
| 3 | 0.06 | 0 | 5 | 1 | 1 | keine | keine |
| 4 | 0.06 | 0 | 2 | 1 | 1 | keine | keine |
| | | | | | | | |
| 5* | 0.06 | 55 | 70 | 3 | 3 | gering | gering |
| 6* | 0.06 | 30 | 45 | 2 | 3 | keine | gering |
| 7* | 0.06 | 43 | 72 | 4 | 4 | keine | gering |
| 8* | 0.06 | 5 | 13 | 1 | 2 | gering | stark |
| | | | | | | | |
| 9 | 0.30 | 0 | 2 | 1 | 1 | keine | keine |
| 10 | 0.15 | 0 | 7 | 1 | 2 | keine | keine |

| | | | | | | | |
|---|---|---|---|---|---|---|---|
| * = Vergleichsbeispiele | | | | | | | |

| Ergebnisse des Rollentestes in Dispersionsfarbe 2 | | | | | | | |
|---|---|---|---|---|---|---|---|
| *Zubereitung* | *Konzentration* | *Makroschaum* | | *Mikroschaum* | | *Banetzungsfehler* | |
| | | *0 Wochen* | *6 Wochen* | *0 Wochen* | *6 Wochen* | *0 Wochen* | *6 Wochen* |
| Nullprobe | 0 | 50 | 50 | 4 | 4 | keine | keine |
| 1 | 0.06 | 0 | 3 | 1 | 1 | keine | keine |
| 2 | 0.06 | 2 | 3 | 1 | 1 | keine | keine |
| 3 | 0.06 | 1 | 1 | 1 | 1 | keine | keine |
| 4 | 0.06 | 0 | 2 | 1 | 1 | keine | keine |
| | | | | | | | |
| 5* | 0.06 | 40 | 46 | 3 | 4 | gering | gering |
| 6* | 0.06 | 23 | 30 | 2 | 3 | keine | gering |
| 7* | 0.06 | 36 | 44 | 3 | 4 | keine | gering |
| 8* | 0.06 | 5 | 7 | 1 | 2 | gering | stark |
| | | | | | | | |
| 9 | 0.30 | 0 | 2 | 1 | 1 | keine | keine |
| 10 | 0.15 | 0 | 7 | 1 | 1 | keine | keine |

| | | | | | | | |
|---|---|---|---|---|---|---|---|
| * = Vergleichsbeispiele | | | | | | | |

| Ergebnisse des Rollentestes in Dispersionsfarbe 3 | | | | | | | |
|---|---|---|---|---|---|---|---|
| *Zubereitung* | *Konzentration* | *Makroschaum* | | *Mikroschaum* | | *Benatzungsfehler* | |
| | | *0 Wochen* | *6 Wochen* | *0 Wochen* | *6 Wochen* | *0 Wochen* | *6 Wochen* |
| Nullprobe | 0 | 40 | 40 | 3 | 3 | keine | keine |
| 1 | 0.06 | 0 | 1 | 1 | 1 | keine | keine |
| 2 | 0.06 | 1 | 1 | 1 | 1 | keine | keine |
| 3 | 0.06 | 0 | 1 | 1 | 1 | keine | keine |
| 4 | 0.06 | 0 | 0 | 1 | 1 | keine | keine |
| | | | | | | | |
| 5* | 0.06 | 32 | 38 | 2 | 4 | gering | gering |
| 6* | 0.06 | 14 | 22 | 2 | 3 | keine | gering |
| 7* | 0.06 | 21 | 28 | 3 | 3 | gering | gering |
| 8* | 0.06 | 2 | 3 | 2 | 2 | gering | stark |
| | | | | | | | |
| 9 | 0.30 | 0 | 2 | 1 | 1 | keine | keine |
| 10 | 0.15 | 0 | 3 | 1 | 1 | keine | keine |

| | | | | | | | |
|---|---|---|---|---|---|---|---|
| * = Vergleichsbeispiele | | | | | | | |

| Ergebnisse des Rollentestes in Dispersionsfarbe 4 | | | | | | | |
|---|---|---|---|---|---|---|---|
| *Zubereitung* | *Konzentration* | *Makroschaum* | | *Mikroschaum* | | *Benetzungsfehler* | |
| | | *0 Wochen* | *6 Wochen* | *0 Wochen* | *6 Wochen* | *0 Wochen* | *6 Wochen* |
| Nullprobe | 0 | 180 | 180 | 5 | 5 | keine | keine |
| 1 | 0.06 | 3 | 5 | 2 | 2 | keine | keine |
| 2 | 0.06 | 4 | 4 | 2 | 2 | keine | keine |
| 3 | 0.06 | 6 | 8 | 2 | 2 | keine | keine |
| 4 | 0.06 | 2 | 8 | 2 | 2 | keine | keine |
| | | | | | | | |
| 5* | 0.06 | 143 | 160 | 4 | 5 | gering | gering |
| 6* | 0.06 | 23 | 28 | 3 | 5 | keine | gering |
| 7* | 0.06 | 97 | 135 | 4 | 5 | gering | gering |
| 8* | 0.06 | 5 | 15 | 3 | 3 | gering | stark |
| | | | | | | | |
| 9 | 0.30 | 2 | 5 | 2 | 2 | keine | keine |
| 10 | 0.15 | 3 | 4 | 2 | 2 | keine | keine |

| | | | | | | | |
|---|---|---|---|---|---|---|---|
| * = Vergleichsbeispiele | | | | | | | |

| Ergebnisse des Rollentestes in Dispersionsfarbe 5 | | | | | | | |
|---|---|---|---|---|---|---|---|
| *Zubereitung* | *Konzentration* | *Makroschaum* | | *Mikroschaum* | | *Benetzungsfehler* | |
| | | *0 Wochen* | *6 Wochen* | *0 Wochen* | *6 Wochen* | *0 Wochen* | *6 Wochen* |
| Nullprobe | 0 | 20 | 20 | 5 | 5 | keine | keine |
| 1 | 0.06 | 3 | 5 | 1 | 1 | keine | keine |
| 2 | 0.06 | 4 | 5 | 1 | 1 | keine | keine |
| 3 | 0.06 | 3 | 5 | 1 | 1 | keine | keine |
| 4 | 0.06 | 2 | 3 | 1 | 1 | keine | keine |
| | | | | | | | |
| 5* | 0.06 | 16 | 20 | 4 | 5 | gering | gering |
| 6* | 0.06 | 8 | 12 | 3 | 4 | keine | gering |
| 7* | 0.06 | 15 | 19 | 4 | 5 | gering | gering |
| 8* | 0.06 | 3 | 9 | 3 | 3 | gering | stark |
| | | | | | | | |
| 9 | 0.30 | 2 | 4 | 1 | 1 | keine | keine |
| 10 | 0.15 | 3 | 5 | 1 | 1 | keine | keine |

| | | | | | | | |
|---|---|---|---|---|---|---|---|
| * = Vergleichsbeispiele | | | | | | | |

Wie aus den vorhergehenden Tabellen ersichtlich ist, zeichnen sich die erfindungsgemäßen Zubereitungen durch ihre universelle Anwendbarkeit aus und können bei den verschiedensten Farbrezepturen eingesetzt werden.

## Patentansprüche

1. Polysiloxan-Polyoxyethylen-Polyoxypropylen-Triblockcopolymer der allgemeinen Formel 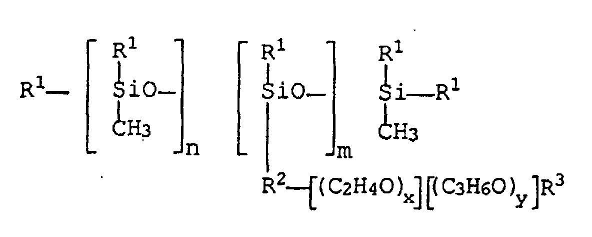 wobei
R¹ = Alkylrest mit 1 bis 8 Kohlenstoffatomen,
R² = -(CH₂)ₚO-, wobei p = 2, 3 oder 4 ist,
R³ = Wasserstoffrest oder Alkylrest mit 1 bis 4 Kohlenstoffatomen,
n = 40 bis 80,
m = 3 bis 10,
x = 3 bis 6 und
y = 20 bis 30,
mit der Maßgabe, daß das Verhältnis x/y 0,12 bis 0,20 beträgt.

2. Entschäumercompound zur Entschäumung von wäßrigen Dispersionsfarben, enthaltend ein Polysiloxan-Polyoxyethylen-Polyoxypropylen-Triblockcopolymer gemäß Anspruch 1 als wirksame Entschäumerkomponente.

3. Entschäumercompound zur Entschäumung von wäßrigen Dispersionsfarben, bestehend aus
| | | |
|---|---|---|
| a) | 72 bis 85 Gew.-Teilen | eines Polysiloxan-Polyoxyethylen-Polyoxypropylen-Triblockcopolymers gemäß Anspruch 1, |
| b) | 15 bis 28 Gew.-Teilen | eines nichtionischen Ethoxylierungsderivates mit einem HLB-Wert von 8 bis 12 sowie |
| c) | 0,1 bis 10,0 Gew.-%, | bezogen auf die Komponenten a) und b), eines anorganischen oder organischen Feststoffes. |

4. Entschäumercompound gemäß Anspruch 3 in Form einer wäßrigen Emulsion.

5. Entschäumercompound gemäß Anspruch 4, **dadurch gekennzeichnet, daß** die mittlere Tröpfchengröße der Emulsion zwischen 1 und 10 µm liegt.

## Claims

1. Polysiloxane-polyoxyethylene-polyoxypropylene triblock copolymer having the general formula: 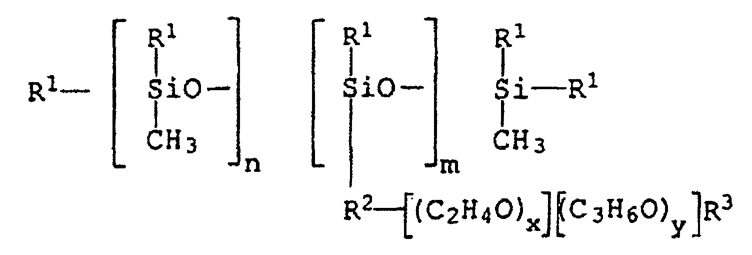 where
R¹ = alkyl group with 1 to 8 carbon atoms,
R² = -(CH₂)ₚO-, where p=2, 3, or 4,
R³ = hydrogen or alkyl group with 1 to 4 carbon atoms,
n = 40 to 80,
m = 3 to 10,
x = 3 to 6, and
y = 20 to 30,
with the proviso that the x/y ratio is 0.12 to 0.20.

2. A defoamer for defoaming aqueous emulsion paints, containing a polysiloxane-polyoxyethylene-polyoxypropylene triblock copolymer according to claim 1 as an effective defoaming component.

3. A defoamer for defoaming aqueous emulsion paints, consisting of:
a) 72 to 85 parts by weight of a polysiloxane-polyoxyethylene-polyoxypropylene triblock copolymer according to claim 1;
b) 15 to 28 parts by weight of a nonionic ethoxylation derivative with an HLB value of 8 to 12; and
c) 0.1 to 10.0 wt %, with respect to the components a) and b), of an inorganic or organic solid substance.

4. A defoamer according to claim 3 in the form of an aqueous emulsion.

5. A defoamer according to claim 4, **characterized in that** the mean particle size of the emulsion is 1-10 µm.

## Revendications

1. Copolymère triséquencé polysiloxane-polyoxyéthylène-polyoxypropylène de formule générale 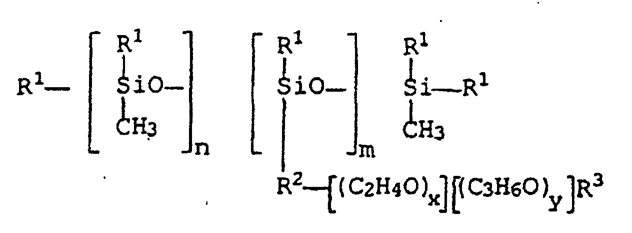 dans laquelle
R¹ = un radical alkyle ayant de 1 à 8 atomes de carbone,
R² = -(CH₂)ₚO-, p étant 2, 3 ou 4,
R³ = un atome d'hydrogène ou un radical alkyle ayant de 1 à 4 atomes de carbone,
N = 40 à 80,
M = 3 à 10,
X = 3 à 6 et
Y = 20 à 30,
étant entendu que le rapport x/y va de 0,12 à 0,20.

2. Composition d'antimousse pour l'élimination de mousse de peintures en dispersion, contenant un copolymère triséquencé polysiloxane-polyoxyéthylène-polyoxypropylène selon la revendication 1 en tant que composant à activité antimousse.

3. Composition d'antimousse pour l'élimination de mousse de peintures en dispersion, constituée de
a) 72 à 85 parties en poids d'un copolymère triséquencé polysiloxane-polyoxyéthylène-polyoxypropylène selon la revendication 1,
b) 15 à 28 parties en poids d'un dérivé d'éthoxylation non ionique ayant un indice HLB (équilibre hydrophile-lipophile) de 8 à 12, ainsi que
c) 0,1 à 10,0 parties en poids, par rapport aux composants a) et b), d'une matière solide minérale ou organique.

4. Composition d'antimousse selon la revendication 3, sous forme d'une émulsion aqueuse.

5. Composition d'antimousse selon la revendication 4, **caractérisée en ce que** la taille moyenne de gouttelettes de l'émulsion est comprise entre 1 et 10 µm.
